# EUROPÄISCHE PATENTANMELDUNG

(11) **EP 4 239 830 A1**
(43) Veröffentlichungstag der Anmeldung: **06.09.2023**
(21) Anmeldenummer: 22159556.4
(22) Anmeldetag: 01.03.2022
(51) Int. Cl.: H02J 7/00, B25F 5/00, H01M 10/42

(54) **AKKUMULATOR MIT ZWEI SCHNITTSTELLENVORRICHTUNGEN**

(71) Anmelder: Hilti Aktiengesellschaft, 9494 Schaan (LI)
(72) Erfinder: Braun, Philipp, 87600 Kaufbeuren (DE); Frenzel, Mathias, 86944 Unterdießen (DE); Hauser, Klaus, 86830 Schwabmünchen (DE); Ziegler, Bernd, 86830 Schabmünchen (DE); Guggemos, Andreas, 86825 Bad Wörishofen (DE)
(74) Vertreter: Hilti Aktiengesellschaft Corporate Intellectual Property

(57) **Zusammenfassung**

Akkumulator, insbesondere als wiederlösbare Energiequelle für eine Werkzeugmaschine, enthalten wenigstens eine Energiespeicherzelle.

Der Akkumulator enthält wenigstens eine erste und zweite Schnittstellenvorrichtung, wobei die wenigstens erste und zweite Schnittstellenvorrichtung sowohl zum Laden der wenigstens einen Energiespeicherzelle mit elektrischer Energie als auch zum Entladen von elektrischer Energie aus der wenigstens einen Energiespeicherzelle ausgestaltet ist.

System enthaltend eine Werkzeugmaschine und wenigstens einen mit der Werkzeugmaschine verbindbaren Akkumulator.

## Beschreibung

Die vorliegende Erfindung betrifft einen Akkumulator, insbesondere als wiederlösbare Energiequelle für eine Werkzeugmaschine, enthalten wenigstens eine Energiespeicherzelle.

Des Weiteren betrifft die vorliegende Erfindung ein System enthaltend eine Werkzeugmaschine und wenigstens einen mit der Werkzeugmaschine verbindbaren Akkumulator.

Akkumulatoren sind weitestgehend aus dem Stand der Technik bekannt und können unter anderem dazu dient, mit Werkzeugmaschinen so verbunden zu werden, dass die Werkzeugmaschine mit elektrischer Energie aus dem Akkumulator versorgt werden kann. Der Akkumulator enthält dazu im Wesentlichen eine Vielzahl an Energiespeicherzellen (auch Akku-Zellen genannt), die in einem festen Gehäuse positioniert sind. Mit Hilfe der Energiespeicherzellen kann elektrische Energie von dem Akkumulator gespeichert und für einen Verbraucher (z.B. eine Werkzeugmaschine) auch bereitgestellt werden.

An einer Seite des Gehäuses des Akkumulators ist dabei eine Schnittstelle vorgesehen, durch die der Akkumulator wiederlösbar entweder mit einer Werkzeugmaschine oder einer Ladevorrichtung verbunden werden kann. Um einen Akkumulator mit elektrischer Energie zu laden, wird der Akkumulator mit der Ladevorrichtung wiederlösbar verbunden. Gemäß dem Stand der Technik weisen die Ladevorrichtungen eine Schnittstelle an einer Oberseite des Gehäuses der Ladevorrichtung auf, durch welche der Akkumulator mechanisch sowie elektrisch mit der Ladevorrichtung verbunden ist.

Ladevorrichtungen und insbesondere solche, die zum Laden der Akkumulatoren für Werkzeugmaschinen verwendet werden, sind relativ aufwendig und komplex ausgestaltet. Die relativ aufwendige sowie komplexe Ausgestaltung dieser Ladevorrichtungen ist dadurch begründet, dass die Ladevorrichtungen unter anderem in rauen bzw. strapaziösen Umgebungen (z.B. auf Baustellen oder Werkstätten) eingesetzt werden und gleichzeitig hochentwickelte Akkumulator in teilweise komplizierten Ladevorgängen mit elektrischer Energie versorgen müssen. Diese Ladevorrichtungen müssen hierzu zum einen sehr solide bzw. widerstandsfähig und zum anderen mit empfindlicher Technik ausgestaltet sein.

Eine besondere technische Herausforderung stellt dabei die Ausgestaltung der Schnittstelle an der Ladevorrichtung dar. Dadurch, dass für gewöhnlich die Schnittstelle nach oben offen ist und somit auch die elektrischen Anschlüsse der Gefahr ausgesetzt sind, dass durch diese Wasser und/oder Staub in das Innere der Ladevorrichtung eindringen kann. Durch das eindringende Wasser kann es unter anderem zu Defekten in Form von Kurzschlüssen in der Ladevorrichtung kommen und damit die Ladevorrichtung dauerhaft beschädigen. Eindringender Staub und anderer Schmutz kann die Ladevorrichtung zusätzlich beschädigen.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 5. Vorteilhafte Ausführungsformen des erfindungsgemäßen Gegenstands sind in den entsprechenden abhängigen Patentansprüchen enthalten.

Die Aufgabe wird insbesondere gelöst durch einen Akkumulator, insbesondere als wiederlösbare Energiequelle für eine Werkzeugmaschine, enthalten wenigstens eine Energiespeicherzelle.

Erfindungsgemäß ist in dem Akkumulator wenigstens eine erste und zweite Schnittstellenvorrichtung enthalten, wobei die wenigstens erste und zweite Schnittstellenvorrichtung sowohl zum Laden der wenigstens einen Energiespeicherzelle mit elektrischer Energie als auch zum Entladen von elektrischer Energie aus der wenigstens einen Energiespeicherzelle ausgestaltet ist.

Gemäß einer alternativen Ausführungsform kann es möglich sein, dass die erste und zweite Schnittstellenvorrichtung zum Senden und Empfangen von Signalen und/oder Daten ausgestaltet ist.

Entsprechend einer weiteren alternativen Ausführungsform kann es möglich sein, dass die wenigstens erste oder zweite Schnittstellenvorrichtung als USB-Buchse ausgestaltet ist.

Gemäß einer weiteren alternativen Ausführungsform kann es möglich sein, dass die wenigstens erste oder zweite Schnittstellenvorrichtung als Kabel mit mindestens einem USB-Stecker ausgestaltet ist.

Entsprechend einer weiteren alternativen Ausführungsform kann es möglich sein, dass eine Stromstärke- und Spannungswerterfassungseinrichtung und/oder eine Stromstärke- und Spannungswertstelleinrichtung enthalten ist.

Gemäß einer weiteren alternativen Ausführungsform kann es möglich sein, eine Kommunikationseinrichtung enthalten ist. Die Kommunikationseinrichtung kann dabei als loT-Modul (Internet-of-Things Modul) ausgestalte sein.

Des Weiteren wird die Aufgabe gelöst durch ein System enthaltend eine Werkzeugmaschine und wenigstens einen mit der Werkzeugmaschine verbindbaren Akkumulator.

Erfindungsgemäß ist vorgesehen, der Akkumulator wenigstens eine erste und zweite Schnittstellenvorrichtung enthält, wobei die wenigstens erste und zweite Schnittstellenvorrichtung sowohl zum Laden der wenigstens einen Energiespeicherzelle mit elektrischer Energie als auch zum Entladen von elektrischer Energie aus der wenigstens einen Energiespeicherzelle ausgestaltet ist und die Werkzeugmaschine wenigstens eine dritte Schnittstellenvorrichtung enthält, wobei die wenigstens dritte Schnittstellenvorrichtung, wobei die dritte Schnittstellenvorrichtung zum wiederlösbaren Verbinden mit wenigstens der ersten oder zweiten Schnittstellenvorrichtung sowie zur Aufnahme von elektrischer Energie ausgestaltet ist.

Entsprechend einer weiteren alternativen Ausführungsform kann es möglich sein, dass die dritte Schnittstellenvorrichtung zum Senden und Empfangen von Signalen und/oder Daten ausgestaltet ist.

Gemäß einer weiteren alternativen Ausführungsform kann es möglich sein, dass der Akkumulator als Bestandteil des Systems eine Stromstärke- und Spannungswerterfassungseinrichtung und/oder eine Stromstärke- und Spannungswertstelleinrichtung enthält. Es ist dabei zu beachten, dass in dem System einzig in dem Akkumulator eine Stromstärke- und Spannungswerterfassungseinrichtung und/oder eine Stromstärke- und Spannungswertstelleinrichtung enthalten ist.

Entsprechend einer weiteren alternativen Ausführungsform kann es möglich sein, dass die wenigstens erste oder zweite Schnittstellenvorrichtung des Akkumulators zum Entladen des Akkumulators mit einem Spannungswert von 21 bis 60 V, insbesondere 48 V, ausgestaltet ist.

Gemäß einer alternativen Ausführungsform kann es möglich sein, dass die wenigstens erste oder zweite Schnittstellenvorrichtung des Akkumulators zum Entladen des Akkumulators mit einem Stromstärkewert von 1 bis 10 A, insbesondere 5 A, ausgestaltet ist.

Entsprechend einer weiteren alternativen Ausführungsform kann es möglich sein, dass die wenigstens erste oder zweite Schnittstellenvorrichtung des Akkumulators zum Entladen des Akkumulators mit einem Leistungswert von 21 bis 600 W, insbesondere 240 W, ausgestaltet ist.

Gemäß einer alternativen Ausführungsform kann es möglich sein, dass die wenigstens erste oder zweite Schnittstellenvorrichtung des Akkumulators zum Entladen des Akkumulators mit einem Spannungswert von 6 bis 42 V ausgestaltet ist.

Entsprechend einer weiteren alternativen Ausführungsform kann es möglich sein, dass die wenigstens erste oder zweite Schnittstellenvorrichtung des Akkumulators zum Entladen des Akkumulators mit einem Stromstärkewert von mindestens 200 A ausgestaltet ist.

Gemäß einer weiteren alternativen Ausführungsform kann es möglich sein, dass die wenigstens erste oder zweite Schnittstellenvorrichtung des Akkumulators zum Entladen des Akkumulators mit einem Leistungswert von 1200 bis 8400 W ausgestaltet ist.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Werkzeugmaschine und einen mit der Werkzeugmaschine verbundenen Akkumulator gemäß einer ersten Ausführungsform;
- Figur 2: eine schematische Seitenansicht auf den Akkumulator gemäß der ersten Ausführungsform verbunden mit einer Ladevorrichtung;
- Figur 3: eine schematische Seitenansicht auf den Akkumulator gemäß der ersten Ausführungsform verbunden mit einem Smartphone;
- Figur 4: eine schematische Seitenansicht auf einen Akkumulator gemäß einer zweiten Ausführungsform; und
- Figur 5: eine schematische Seitenansicht auf den Akkumulator gemäß der zweiten Ausführungsform.

### Ausführunasbeispiele:

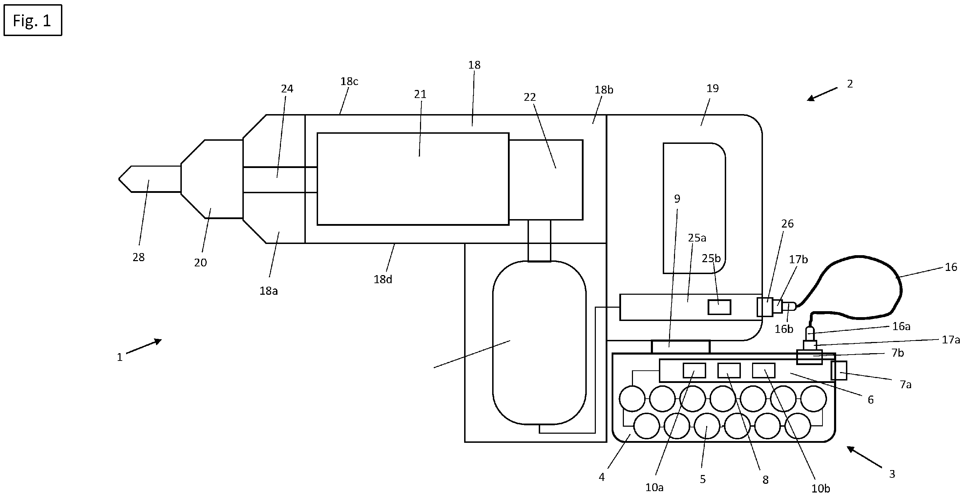

Figur 1 zeigt ein erfindungsgemäßes System 1 aus einer Werkzeugmaschine 2 und einem Akkumulator 3 gemäß eines ersten Ausführungsbeispiels. Der Akkumulator 3 ist dabei wiederlösbar mit der Werkzeugmaschine verbunden.

Der Akkumulator 3 dient als wiederlösbare Energieversorgung für die Werkzeugmaschine 2. Wie nachfolgend noch beschrieben kann anstelle der Werkzeugmaschine 2 auch eine andere Vorrichtung durch den Akkumulator 3 mit elektrischer Energie versorgt werden.

Der Akkumulator 3 enthält im Wesentlichen ein Akku-Gehäuse 4, eine Vielzahl an Energiespeicherzellen 5, eine Steuereinrichtung 6, eine erste und zweite Schnittstellenvorrichtung 7a, 7b und eine Kommunikationseinrichtung 8.

Die Energiespeicherzellen 5 dienen zum Aufnehmen und Speichern von elektrische Energie. In dem vorliegenden Ausführungsbeispiel sind die Energiespeicherzellen 5 als zylindrische Zellen auf Basis einer Lithium-Ionen-Technologie ausgestaltet. Alternativ können die Energiespeicherzellen 5 auch in Form von Pouch-Zellen ausgestaltet sein.

Wie in Figur 1 angedeutet sind unter anderen die einzelnen Energiespeicherzellen 5 und die Steuereinrichtung 6 im Inneren des Akku-Gehäuses 4 positioniert. Die Energiespeicherzellen 5 sind dabei miteinander und mit der Steuereinrichtung 6 elektrisch über Leitungen L verbunden. Durch die Verbindung kann elektrische Energie von bzw. zu den Energiespeicherzellen 5 geleitet werden.

Das Akku-Gehäuse 4 weist eine Oberseite 4a, eine Unterseite 4b, eine Vorderseite 4c, eine Rückseite 4d, eine linke Seitenwand und eine rechte Seitenwand auf. Die linke Seitenwand und rechte Seitenwand sind in den Figuren nicht dargestellt.

Wie in den Figuren angedeutet ist an der Oberseite 4a des Akku-Gehäuses 4 eine Verbindungsvorrichtung 9 positioniert. Die Verbindungsvorrichtung 9 dient zum wiederlösbaren Verbinden des Akkumulators 3 mit der Werkzeugmaschine 2. In dem vorliegenden Ausführungsbeispiel ist die Verbindungsvorrichtung 9 des Akkumulators 3 als erstes Bestandteil eines Schienensystems ausgestaltet.

In Figur 1 bis 3 ist der Akkumulator 3 gemäß der ersten Ausführungsform gezeigt, wobei die erste Schnittstellenvorrichtung 7a an der Rückseite 4d und die zweite Schnittstellenvorrichtung 7b an der Oberseite 4a positioniert ist. Alternativ können die Schnittstellenvorrichtungen 7a, 7b an anderen Stelle positioniert sein oder auch mehr als zwei Schnittstellenvorrichtungen 7a, 7b vorgesehen sein.

Gemäß dem ersten Ausführungsbeispiel des Akkumulators 3 ist sowohl die erste als auch die zweite Schnittstellenvorrichtung 7a, 7b als USB-C Buchse (d.h. USB Typ C Buchse) ausgestaltet. Durch die Ausgestaltung der ersten und zweiten Schnittstellenvorrichtung 7a, 7b als USB-C Buchse ist es möglich, dass neben der Aufnahme und Abgabe von elektrischer Energie über die Schnittstellenvorrichtung 7a, 7b auch elektrische Signale für den Austausch von Daten und Informationen über die Schnittstellenvorrichtung 7a, 7b gesendet und empfangen werden können.

Die Steuereinrichtung 6 enthält im Wesentlichen eine Stromstärke- und Spannungswerterfassungseinrichtung 10a, eine Stromstärke- und Spannungswertstelleinrichtung 10b sowie die Kommunikationseinrichtung 8.

Die Stromstärke- und Spannungswerterfassungseinrichtung 10a dient zum Messen und Ermitteln von Stromstärke- und Spannungswerten. Die Stromstärke- und Spannungswertstelleinrichtung 10 dient zum Einstellen eines bestimmten Stromstärkewerts und Spannungswert. Die Kommunikationseinrichtung 8 dient zum Erzeugen, Aussenden, Empfangen und Verarbeiten von elektrischen Signalen für den Austausch von Daten und Informationen. Die Kommunikationseinrichtung 8 kann dabei drahtgebunden oder auch drahtlose ausgestaltet sein. Im Falle der drahtlosen Ausgestaltungform kann es sich um eine Bluetooth-Kommunikationseinrichtung handeln.

Mit Hilfe der Steuereinrichtung 6 können die einzelnen Funktionen des Akkumulators 3 gesteuert bzw. geregelt werden. Zu den Funktionen des Akkumulators 3 gehört unter anderem die Regelung der Aufnahme von elektrischer Energie in die Energiespeicherzellen 5 sowie die Abgabe von elektrischer Energie aus den Energiespeicherzellen 5. Die Steuereinrichtung 6 ist dabei insbesondere dazu ausgestaltet, den Spannungswert, den Stromstärkewert oder den Leistungswert für die Aufnahme (d.h. beim Laden der Energiespeicherzellen 5) oder für die Abgabe (d.h. beim Entladen der Energiespeicherzellen 5) von elektrischer Energie in bzw. aus den Energiespeicherzellen 5 zu regeln.

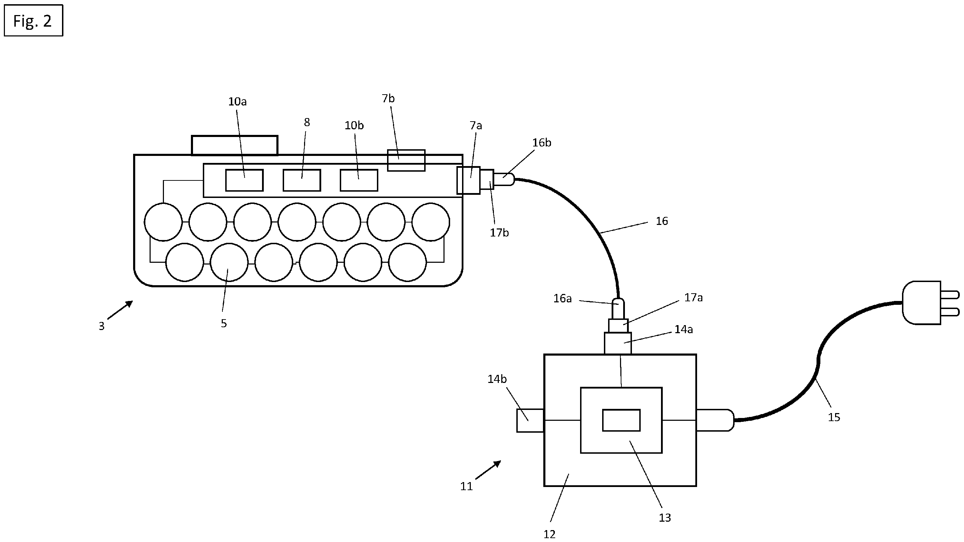

In Figur 2 ist der Akkumulator 3 gemäß dem ersten Ausführungsbeispiel mit einer Ladevorrichtung 11 wiederlösbar verbunden dargestellt. Die Ladevorrichtung 11 dient zum Versorgen eines oder mehrerer Akkumulatoren 3 mit elektrischer Energie. Darüber hinaus ist die Ladevorrichtung 11 auch dazu ausgestaltet, um elektrische Energie von einem oder mehreren angeschlossen Akkumulatoren 3 aufzunehmen. Die von den Akkumulatoren 3 aufgenommene elektrische Energie kann in einem Energiespeicher 5 der Ladevorrichtung 11 gespeichert werden.

Die Ladevorrichtung 11 enthält dabei im Wesentlichen ein Lader-Gehäuse 12 mit einer Steuereinrichtung 13, eine erste und zweite Schnittstelle 14a, 14b sowie ein Stromkabel 15.

Mit Hilfe der Steuereinrichtung 13 können die einzelnen Funktionen der Ladevorrichtung 11 gesteuert bzw. geregelt werden. Zu den Funktionen der Ladevorrichtung 11 gehört unter anderem die Regelung der Abgabe von elektrischer Energie zu dem Akkumulator 3 bzw. zu den Energiespeicherzellen 5 des Akkumulators 3. Die Steuereinrichtung 11 ist dabei insbesondere dazu ausgestaltet, den Spannungswert, den Stromstärkewert oder den Leistungswert für die Abgabe (d.h. beim Laden der Energiespeicherzellen 5) von elektrischer Energie in die Energiespeicherzellen 5 des angeschlossenen Akkumulators 3 zu regeln.

Die erste und zweite Schnittstelle 14a, 14b ist als USB-C Buchse (d.h. USB Typ C Buchse) ausgestaltet, sodass korrespondierend ausgestaltete USB-C Stecker angeschlossen werden können.

Mit Hilfe des Stromkabels 15 kann die Ladevorrichtung 11 wiederlösbar mit einer Netzstromquelle (d.h. Steckdose) verbunden werden, um elektrische Energie aufzunehmen.

Wie ebenfalls in Figur 2 angedeutet kann die Ladevorrichtung 11 mit dem Akkumulator 3 über ein Verbindungskabel 16 verbunden werden. Hierzu weist das Verbindungskabel 16 an einem ersten Ende 16a einen ersten Stecker 17a und an einem zweiten Ende 16b einen zweiten Stecker 17b auf. In dem vorliegenden Ausführungsbeispiel ist sowohl der erste Stecker 17a als auch der zweite Stecker 17b in Form eines USB-C Steckers (d.h. USB Typ C Stecker) ausgestaltet, sodass der erste Stecker 17a in die als USB-C Buchse ausgestaltete erste Schnittstellenvorrichtung des Akkumulators 3 und der zweite Stecker 17b in die als USB-C Buchse ausgestaltete erste Schnittstelle 14a der Ladevorrichtung 11 gesteckt werden kann.

Die durch das Stromkabel 15 von der Steckdose aufgenommene elektrische Energie wird von der ersten Schnittstelle 14 der Ladevorrichtung 11 über das Verbindungskabel 15 an die erste Schnittstellenvorrichtung 7a des Akkumulators 3 und schließlich zu den Energiespeicherzellen 5 des Akkumulators 3 geleitet.

Durch die Ausgestaltung der Schnittstellenvorrichtungen 7a, 7b an dem Akkumulator 3 sowie der Ladevorrichtung 11 in Form von USB-C Buchse kann ein Spannungswert von 21 bis 60 V, und insbesondere 48 V, ein Stromstärkewert von 1 bis 10 A, insbesondere 5 A, sowie ein Leistungswert von 21 bis 600 W, insbesondere 240 W, für das Übertragen von elektrischer Energie aus der Ladevorrichtung 11 zu dem Akkumulator 3 eingestellt sein.

Gemäß dem Ausführungsbeispiel in Figur 1 ist die Werkzeugmaschine 2 in Form eines Bohrhammers ausgestaltet. Alternativ kann die Werkzeugmaschine 2 auch in Form einer Bohrmaschine, einer Säge, eines Schleifgeräts oder dergleichen ausgestaltet sein.

Wie ebenfalls in Figur 1 gezeigt enthält die Werkzeugmaschine 2 im Wesentlichen ein Gehäuse 18, einen Handgriff 19, eine Werkzeugaufnahme 20, einen Antrieb 21, eine Getriebevorrichtung 22, eine Schlagwerkvorrichtung 23, eine Abtriebswelle 24, eine Steuervorrichtung 25 und eine dritte Schnittstellenvorrichtung 26.

Das Gehäuse 18 enthält dabei im Wesentlichen ein vorderes Ende 18a, ein hinteres Ende 18b, ein oberes Ende 18c und ein unteres Ende 18d.

Der Handgriff 19 dient zum Halten und Führen der Werkzeugmaschine 2 und ist an dem hinteren Ende 18b des Gehäuses 18 positioniert.

Die Werkzeugaufnahme 2 dient zum Aufnehmen und Halten eines als Bohrer ausgestalteten Werkzeugs 27 und ist an dem vorderen Ende 18a des Gehäuses 18 positioniert.

Der Antrieb 21 ist in Form eines bürstenlosen Elektromotors ausgebildet und dient zum Erzeugen eines Drehmoments.

Wie ebenfalls in Figur 1 gezeigt sind der als Elektromotor ausgestaltete Antrieb 21, die Getriebevorrichtung 22, die Schlagwerkvorrichtung 23, die Abtriebswelle 24 sowie die Werkzeugaufnahme 20 so zueinander in dem Gehäuse 18 der Werkzeugmaschine 2 angeordnet, dass das in dem Antrieb 21 erzeugte Drehmoment über die Getriebevorrichtung 22, die Schlagwerkvorrichtung 23, die Abtriebswelle 24 auf die Werkzeugaufnahme 20 übertragen wird.

Die Steuervorrichtung 25a dient zum Steuern und Regeln der einzelnen Funktionen der Werkzeugmaschine 2. Des Weiteren enthält die Steuervorrichtung 25a eine Kommunikationseinheit 25b zum Senden und Empfangen von Daten bzw. Informationen in Form von elektrischen Signalen. Mit Hilfe der Kommunikationseinheit 25b kann eine Kommunikation und ein damit verbundener Austausch von Daten und Informationen zwischen der Werkzeugmaschine 2 und der Kommunikationseinrichtung 8 des Akkumulators 3 erzeugt werden. Die Kommunikationseinheit 25b der Werkzeugmaschine 2 kann dabei drahtgebunden oder drahtlos ausgestaltet sein.

Wie in Figur 1 gezeigt ist unterhalb des Handgriffs 19 eine Anbindungsvorrichtung 28 positioniert. Die Anbindungsvorrichtung 28 dient zum wiederlösbaren Verbinden der Werkzeugmaschine 2 mit dem Akkumulators 3. Die Anbindungsvorrichtung 28 der Werkzeugmaschine 2 ist als zweites Bestandteil des Schienensystems ausgestaltet, sodass die Anbindungsvorrichtung 28 mit der korrespondierenden Verbindungsvorrichtung 9 des Akkumulators 3 wiederlösbar verbunden werden kann. In Figur 1 ist die Verbindungsvorrichtung 9 des Akkumulators 3 mit der Anbindungsvorrichtung 28 der Werkzeugmaschine 2 verbunden.

Die dritte Schnittstellenvorrichtung 26 ist ebenfalls als USB-C Buchse (d.h. USB Typ C Buchse) ausgestaltet. Durch die dritte Schnittstellenvorrichtung 26 kann elektrische Energie über die Steuervorrichtung 11 an die Verbraucher der Werkzeugmaschine 2, beispielsweise an den Antrieb 21, geleitet werden. Zur Versorgung der Werkzeugmaschine 2 mit elektrischer Energie wird die dritte Schnittstellenvorrichtung 26 der Werkzeugmaschine 2 mit dem Akkumulator 3 verbunden. Hierzu wird das als USB-C Stecker ausgestaltete erste Ende 16a des Verbindungskabels 16 mit der als USB-C Buchse ausgestalteten dritten Schnittstellenvorrichtung 26 und das als USB-C Stecker ausgestaltete zweite Ende 16b des Verbindungskabels 16 mit der als USB-C Buchse ausgestalteten zweiten Schnittstellenvorrichtung 7b des Akkumulators 3 verbunden. Durch das angeschlossene Verbindungskabel 16 kann sowohl elektrische Energie als auch elektrische Signale für einen Daten- und Informationsaustausch zwischen der Werkzeugmaschine 2 und dem Akkumulator 3 transferiert werden.

Nach dem Verbinden des Akkumulators 3 mit der Werkzeugmaschine 2 wird zunächst eine Kommunikation in Form eines Austausches von entsprechenden Signalen zwischen dem Akkumulator 3 und der Werkzeugmaschine 2 aufgebaut. Durch den Aufbau der Kommunikation können dem Akkumulator 3 die spezifischen Ladekennwerte bzw. Ladeparameter für die Energiespeicherzelle 5 der Werkzeugmaschine 2 übermittelt werden, sodass die Ladekennwerte bzw. Ladeparameter mit Hilfe der Steuereinrichtung 6 eingestellt werden. Bei den Ladekennwerten bzw. Ladeparametern handelt sich um die spezifische Ladespannung, Ladestromstärke bzw. Ladeleistung, die für die Energiespeicherzelle des Smartphones geeignet ist. Durch die Ausgestaltung der Schnittstellenvorrichtungen an dem Akkumulator sowie der Werkzeugmaschine 2 in Form von USB-C Buchse kann ein Spannungswert von 21 bis 60 V, und insbesondere 48 V, ein Stromstärkewert von 1 bis 10 A, insbesondere 5 A, sowie ein Leistungswert von 21 bis 600 W, insbesondere 240 W, für das Übertragen von elektrischer Energie aus dem Akkumulator an die Werkzeugmaschine eingestellt sein.

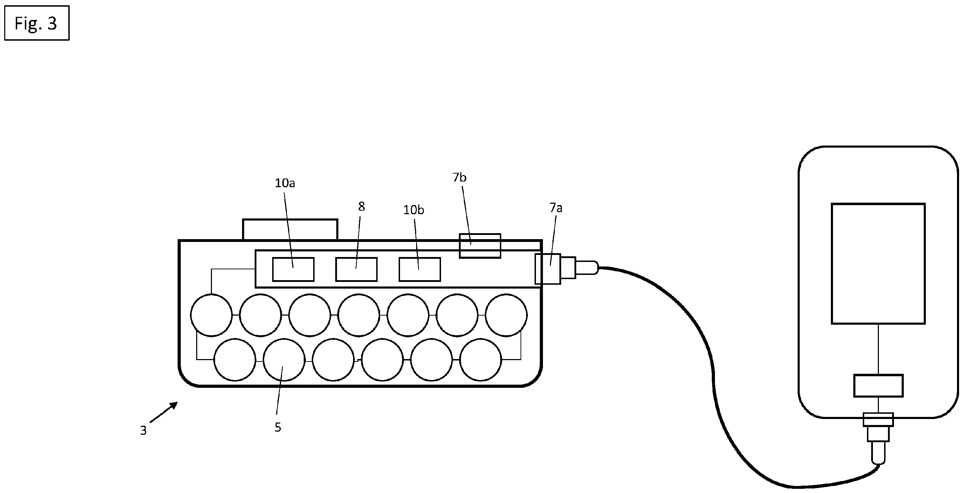

In Figur 3 ist der Akkumulator 3 gemäß dem ersten Ausführungsbeispiel mit einem Smartphone 29 wiederlösbar verbunden dargestellt. Das Smartphone 29 enthält im Wesentlichen eine Steuereinrichtung 30, eine Energiespeicherzelle 31 und eine USB-C Buchse als Anschluss 32 für die Übertragung von elektrischer Energie. Die USB-C Buchse 32 kann ebenfalls zum Senden und Empfangen von elektrischen Signalen für eine Kommunikation dienen. Zum Verbinden des Akkumulators 3 mit dem Smartphone 29 ist das Verbindungskabel 16 mit dem ersten USB-C Stecker 17a mit einer als USB-C Buchse ausgestalteten Schnittstellenvorrichtung 7a, 7b des Akkumulators 3 verbunden sowie mit dem zweiten USB-C Stecker 17b mit der als USB-C Buchse 32 des Smartphones 29 verbunden. Durch die Verbindung des Akkumulators 3 mit dem Smartphone 29 wird zunächst eine Kommunikation in Form eines Austausches von entsprechenden Signalen zwischen dem Akkumulator 3 und dem Smartphone 29 aufgebaut. Durch den Aufbau der Kommunikation können dem Akkumulator 3 die spezifischen Ladekennwerte bzw. Ladeparameter für die Energiespeicherzelle 31 des Smartphones 29 übermittelt werden, sodass die Ladekennwerte bzw. Ladeparameter mit Hilfe der Steuereinrichtung 6 des Akkumulators 3 eingestellt werden. Bei den Ladekennwerten bzw. Ladeparametern handelt sich um die spezifische Ladespannung, Ladestromstärke bzw. Ladeleistung, die für die Energiespeicherzelle 31 des Smartphones 29 geeignet ist.

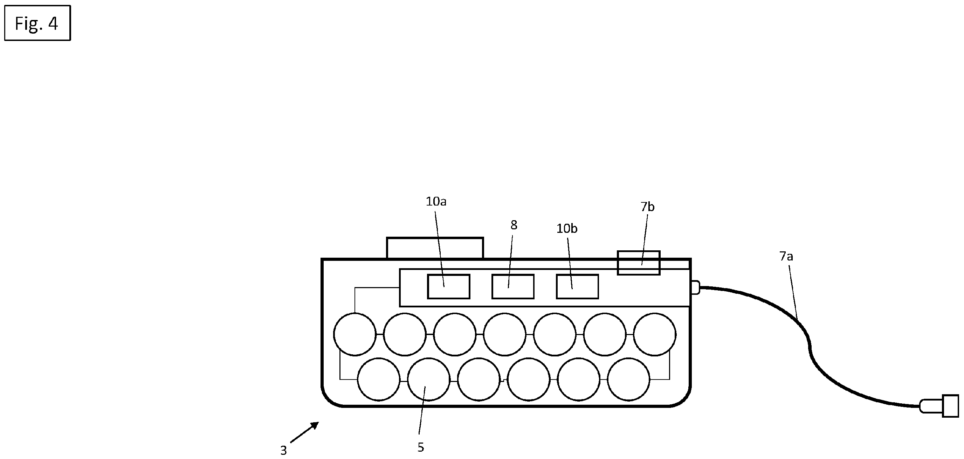

In Figur 4 ist der Akkumulator 3 gemäß einem zweiten Ausführungsbeispiel gezeigt. Der Akkumulator 3 gemäß dem zweiten Ausführungsbeispiel ist im Wesentlichen identisch mit dem Akkumulator 3 gemäß dem ersten Ausführungsbeispiel. Im Gegensatz zum ersten Ausführungsbeispiel enthält der Akkumulator 3 entsprechend dem zweiten Ausführungsbeispiel eine erste Schnittstellenvorrichtung 7a in Form eines Kabels 33 mit einem USB-C Stecker und eine zweite Schnittstellenvorrichtung 7b in Form einer USB-C Buchse.

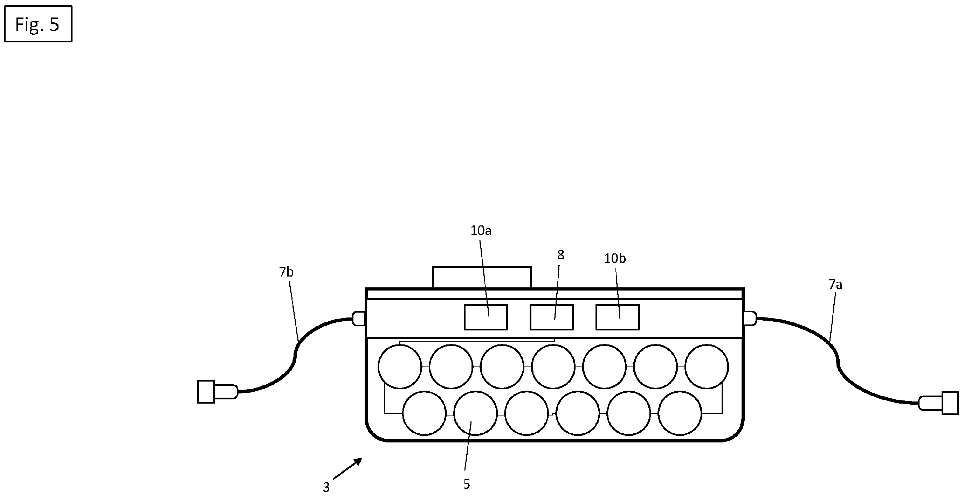

In Figur 5 ist der Akkumulator 3 gemäß einem dritten Ausführungsbeispiels gezeigt. Der Akkumulator 3 gemäß dem zweiten Ausführungsbeispiel ist im Wesentlichen identisch mit dem Akkumulator 3 gemäß dem ersten Ausführungsbeispiel. Im Gegensatz zum ersten Ausführungsbeispiel enthält der Akkumulator 3 entsprechend dem dritten Ausführungsbeispiel eine erste Schnittstellenvorrichtung 7a in Form eines ersten Kabels 33 mit einem USB-C Stecker und eine zweite Schnittstellenvorrichtung 7b in Form eines zweiten Kabels 34 mit einem USB-C Stecker.

### Bezugszeichen

- 1: System
- 2: Werkzeugmaschine
- 3: Akkumulator
- 4: Akku-Gehäuse
- 5: Energiespeicherzelle
- 6: Steuereinrichtung des Akkumulators
- 7a: erste Schnittstellenvorrichtung des Akkumulators
- 7b: zweite Schnittstellenvorrichtung des Akkumulators
- 8: Kommunikationseinrichtung
- 9: Verbindungsvorrichtung
- 10a: Spannungswerterfassungseinrichtung,
- 10b: Stromstärke- und Spannungswertstelleinrichtung
- 11: Ladevorrichtung
- 12: Lader-Gehäuse
- 13: Steuereinrichtung des Lader-Gehäuses
- 14a: erste Schnittstelle
- 14b: zweite Schnittstelle
- 15: Stromkabel
- 16: Verbindungskabel
- 16a: erstes Ende des Verbindungskabels
- 16b: zweites Ende des Verbindungskabels
- 17a: erster Stecker des Verbindungskabels
- 17b: zweiter Stecker des Verbindungskabels
- 18: Gehäuse der Werkzeugmaschine
- 18a: vorderes Ende des Gehäuses der Werkzeugmaschine
- 18b: hinteres Ende des Gehäuses der Werkzeugmaschine
- 18c: oberes Ende des Gehäuses der Werkzeugmaschine
- 18d: unteres Ende des Gehäuses der Werkzeugmaschine
- 19: Handgriff
- 20: Werkzeugaufnahme
- 21: Antrieb
- 22: Getriebevorrichtung
- 23: Schlagwerkvorrichtung
- 24: Abtriebswelle
- 25a: Steuervorrichtung
- 25b: Kommunikationseinheit
- 26: dritte Schnittstellenvorrichtung
- 27: Werkzeug
- 28: Anbindungsvorrichtung
- 29: Smartphone
- 30: Steuereinrichtung des Smartphones
- 31: Energiespeicherzelle des Smartphones
- 32: Anschluss des Smartphones
- 33: erstes Kabel
- 34: zweites Kabel
- L: Leitungen

## Patentansprüche

1. Akkumulator (3), insbesondere als wiederlösbare Energiequelle für eine Werkzeugmaschine (2), enthalten wenigstens eine Energiespeicherzelle (5),
**gekennzeichnet durch** wenigstens eine erste und zweite Schnittstellenvorrichtung (7a, 7b) enthalten ist, wobei die wenigstens erste und zweite Schnittstellenvorrichtung (7a, 7b) sowohl zum Laden der wenigstens einen Energiespeicherzelle (5) mit elektrischer Energie als auch zum Entladen von elektrischer Energie aus der wenigstens einen Energiespeicherzelle (5) ausgestaltet ist.

2. Akkumulator (3) nach Anspruch 1,
**dadurch gekennzeichnet, dass** die erste und zweite Schnittstellenvorrichtung (7a, 7b) zum Senden und Empfangen von Signalen und/oder Daten ausgestaltet ist.

3. Akkumulator (3) nach Anspruch 1 oder 2,
**dadurch gekennzeichnet, dass** die wenigstens erste oder zweite Schnittstellenvorrichtung (7a, 7b) als USB-Buchse ausgestaltet ist.

4. Akkumulator (3) nach Anspruch 1 oder 2,
**dadurch gekennzeichnet, dass** die wenigstens erste oder zweite Schnittstellenvorrichtung (7a, 7b) als Kabel (33, 34) mit mindestens einem USB-Stecker ausgestaltet ist.

5. Akkumulator (3) nach wenigstens einem der Ansprüche 1 bis 4,
**dadurch gekennzeichnet, dass** eine Stromstärke- und Spannungswerterfassungseinrichtung (10a) und/oder eine Stromstärke- und Spannungswertstelleinrichtung (10b) enthalten ist.

6. Akkumulator (3) nach wenigstens einem der Ansprüche 1 bis 5,
**dadurch gekennzeichnet, dass** eine Kommunikationseinrichtung (8) enthalten ist.

7. System (1) enthaltend eine Werkzeugmaschine (2) und wenigstens einen mit der Werkzeugmaschine (2) verbindbaren Akkumulator (3),
**dadurch gekennzeichnet, dass** der Akkumulator (3) wenigstens eine erste und zweite Schnittstellenvorrichtung (7a, 7b) enthält, wobei die wenigstens erste und zweite Schnittstellenvorrichtung (7a, 7b) sowohl zum Laden der wenigstens einen Energiespeicherzelle (5) mit elektrischer Energie als auch zum Entladen von elektrischer Energie aus der wenigstens einen Energiespeicherzelle (5) ausgestaltet ist und die Werkzeugmaschine (2) wenigstens eine dritte Schnittstellenvorrichtung (26) enthält, wobei die dritte Schnittstellenvorrichtung (26) zum wiederlösbaren Verbinden mit wenigstens der ersten oder zweiten Schnittstellenvorrichtung (7a, 7b) sowie zur Aufnahme von elektrischer Energie ausgestaltet ist.

8. System (1) nach Anspruch 5,
**dadurch gekennzeichnet, dass** die dritte Schnittstellenvorrichtung (26) zum Senden und Empfangen von Signalen und/oder Daten ausgestaltet ist.
